# FASCICULE DE BREVET EUROPEEN

(11) **EP 0 861 385 B1**
(45) Date de publication et mention de la délivrance du brevet: **05.12.2001**
(21) Numéro de dépôt: 96945767.0
(22) Date de dépôt: 06.09.1996
(51) Int. Cl.: F16D 65/56

(54) **MOTEUR DE FREIN A TOLERANCE AUGMENTEE**
BREMSBETÄTIGUNGSVORRICHTUNG MIT ERHÖHTER TOLERANZ
BRAKE BOOSTER HAVING INCREASED TOLERANCE

(30) Priorité: 17.11.1995 FR 9513630
(43) Date de publication de la demande: 02.09.1998
(73) Titulaire: Bosch Systemes de Freinage, 93700 Drancy (FR)
(72) Inventeur: HULLIGER, Claude, F-60520 Thiers-sur-Thève (FR)
(74) Mandataire: Bentz, Jean-Paul
(86) Numéro de dépôt international: FR9601375
(87) Numéro de publication internationale: WO9718405

(56) Documents cités:
- WO-A-94/09285

## Description

La présente invention concerne un moteur de frein comprenant : un corps essentiellement cylindrique rempli d'un fluide hydraulique soumis à une pression variable; un actionneur mécanique incluant deux plateaux à rotation relative constituant un ensemble présentant, suivant une direction axiale, une épaisseur susceptible d'être réglée par actionnement d'un organe de commande accessible depuis l'extérieur de ce corps; un piston de frein obturant le corps de façon étanche et susceptible d'y coulisser sous l'effet de l'actionneur pour actionner à son tour au moins un organe de friction; et un dispositif de réglage automatique disposé à l'intérieur du corps entre l'actionneur mécanique et le piston pour rattraper les jeux résultant de l'usure de l'organe de friction, ce dispositif comprenant lui-même : une vis sélectivement rotative, sur une première extrémité de laquelle est engagé un écrou allongé, fixe en rotation; un ressort précontraint appliquant une première extrémité de l'écrou contre l'un au moins des plateaux; et un organe de retenue sur lequel s'appuie le ressort et enserrant l'un au moins des plateaux, la première extrémité de l'écrou, et le ressort; la seconde extrémité de la vis étant engagée dans un orifice percé dans le piston, qu'elle obture de façon étanche pour être soumise à la pression atmosphérique, et présentant un épaulement conique susceptible d'être sélectivement bloqué en rotation par une surface conique interne du piston, fixe en rotation, contre laquelle cet épaulement se trouve appuyé avec une force croissant avec la pression du fluide hydraulique.

Un moteur de frein de ce type est par exemple connu dans l'art antérieur par le document de demande internationale de brevet PCT/FR93/00918.

L'un des problèmes rencontrés dans la conception des moteurs de freins, quels que soient leur structure, consiste à garantir leur très haute fiabilité de fonctionnement dans un contexte de production en grande série et de diminution des coûts de fabrication.

En particulier, il apparaît de plus en plus nécessaire de prevoir que ces moteurs de freins présentent un fonctionnement sans faille même lorsque les limites de tolérance de fabrication sont atteintes.

L'invention a précisément pour but de proposer un moteur de frein de conception robuste, remplissant les exigences de fabrication actuelles pour la grande série.

A cette fin, le moteur de frein de l'invention est essentiellement caractérisé en ce qu'en plus des éléments déjà cités, il comprend un manchon cylindrique axial dans lequel l'écrou se trouve guidé par sa seconde extrémité, et qui est pourvu d'une collerette radiale emprisonnée entre le ressort et l'organe de retenue.

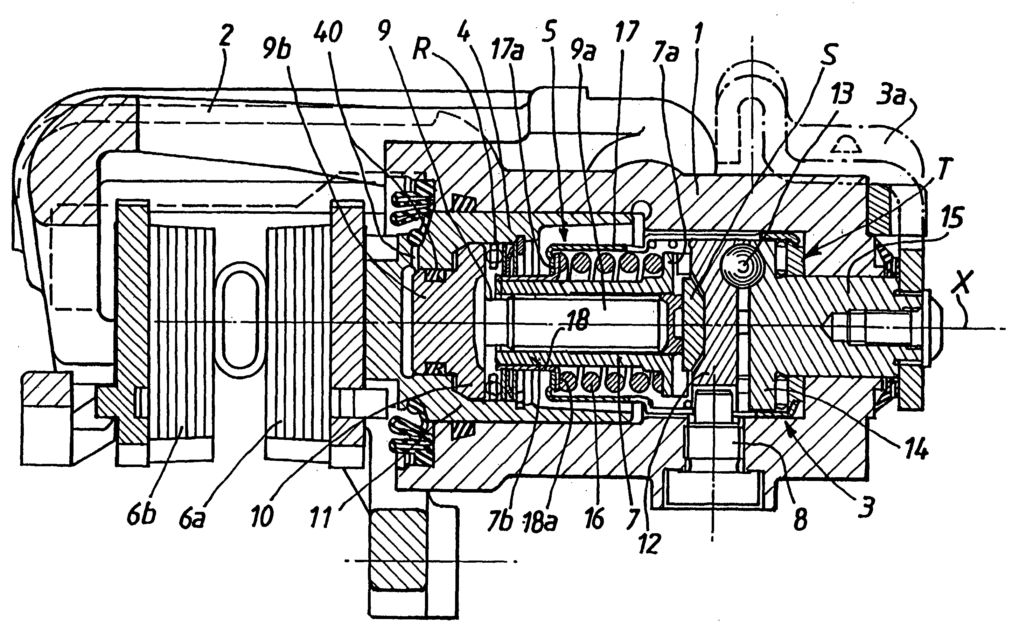

D'autres caractéristiques et avantages de l'invention ressortiront clairement de la description qui en est faite ci-après, à titre indicatif et nullement limitatif, en référence à la figure annexée représentant, en coupe, un moteur de frein conforme à l'invention.

L'invention concerne un moteur de frein comprenant un corps essentiellement cylindrique 1 rempli d'un liquide de frein soumis à une pression variable et solidaire d'un étrier 2.

Un actionneur mécanique 3, comportant un levier de commande rotatif 3a accessible depuis l'extérieur du corps, est par ailleurs logé à l'intérieur de ce dernier.

Un piston de frein 4 est monté coulissant dans le corps 1 qu'il obture de façon étanche, le déplacement de ce piston étant commandé par l'actionneur 3 à travers une entretoise 5 de longueur variable, et permettant le déplacement de deux organes de friction 6a, 6b dont l'un est maintenu par l'étrier 2 et l'autre poussé par ce piston.

L'entretoise 5, qui fait partie d'un dispositif de réglage automatique destiné à rattraper les jeux résultant de l'usure des organes de friction, comprend d'une part un écrou allongé 7 indirectement bloqué en rotation par un pion 8 solidaire du corps 1, et d'autre part une vis 9, l'écrou étant engagé sur la première extrémité 9a de la vis 9.

La seconde extrémité 9b de la vis est engagée dans un orifice 40 percé dans le piston 4 et qu'elle obture de façon étanche pour être soumise à la pression atmosphérique.

Par ailleurs, la seconde extrémité 9b de la vis 9 présente un épaulement conique 10 susceptible de s'appuyer contre une surface conique interne 11 du piston 4.

L'écrou allongé 7 et la vis 9 sont sollicités par une force élastique dans un sens propre à les dévisser l'un de l'autre et à augmenter corrélativement la longueur de l'entretoise 5 qu'ils constituent ensemble, cette force élastique étant appliquée sur la vis 9 par l'intermédiaire d'un coussinet à roulement R pour permettre, lors de l'accroissement de la pression du liquide de frein, une rotation de la vis jusqu'à la position où l'épaulement conique 10 se trouve bloqué en rotation par la surface interne 11 du piston 4.

Plus précisément, l'actionneur mécanique 3 est du type à plateau rotatif à cames et à billes, et comprend un premier plateau 12 bloqué en rotation par un pion 8 et bloquant lui-même en rotation la première extrémité 7a de l'écrou allongé 7 par l'intermédiaire d'un sabot S, des billes telles que 13, et un second plateau 14 relié à un axe 15 traversant le corps de façon étanche et donnant prise au levier de commande 3a, un coussinet à roulement T étant disposé entre le corps 1 et le second plateau 14 pour permettre la rotation aisée de ce dernier.

La force élastique tendant à dévisser l'écrou 7 de la vis 9 est essentiellement exercée par un ressort précontraint 16 qui applique la première extrémité 7a de l'écrou, conformée en épaulement radial, contre les plateaux 12 et 14.

A cette fin, ce ressort 16, la première extrémité 7a de l'écrou, les plateaux 12 et 14, et les billes 13 se trouvent enserrés par un organe de retenue 17, qui adopte par exemple la forme d'une cage 17, sertie sur la face externe du coussinet T, et dont un rétrécissement radial 17a offre un appui au ressort 16.

Selon l'invention, le moteur de frein comprend en outre un manchon cylindrique 18, de même axe X que le corps 1, dans lequel l'écrou 7 se trouve guidé à faible jeu par sa seconde extrémité 7b, et qui est pourvu d'une collerette radiale 18a emprisonnée entre le ressort 16 et le rétrécissement radial 17a de l'organe de retenue 17, cet agencement permettant de garantir que la vis 9 et l'écrou 7 restent coaxiaux en toute circonstance.

## Revendications

1. Moteur de frein comprenant : un corps (I) essentiellement cylindrique rempli d'un fluide hydraulique soumis à une pression variable; un actionneur mécanique (3) incluant deux plateaux à rotation relative (12, 14) constituant un ensemble présentant, suivant une direction axiale (X), une épaisseur susceptible d'être réglée par actionnement d'un organe de commande (3a) accessible depuis l'extérieur de ce corps; un piston de frein (4) obturant le corps de façon étanche et susceptible d'y coulisser sous l'effet de l'actionneur pour actionner à son tour au moins un organe de friction (6a, 6b); et un dispositif de réglage automatique (5) disposé à l'intérieur du corps entre l'actionneur mécanique et le piston pour rattraper les jeux résultant de l'usure de l'organe de friction, ce dispositif comprenant lui-même : une vis (9) sélectivement rotative, sur une première extrémité (9a) de laquelle est engagé un écrou allongé (7), fixe en rotation; un ressort précontraint (16) appliquant une première extrémité (7a) de l'écrou contre l'un au moins des plateaux (12, 14); et un organe de retenue (17) sur lequel s'appuie le ressort (16) et enserrant l'un au moins des plateaux (12, 14), la première extrémité (7a) de l'écrou, et le ressort (16); la seconde extrémité (9b) de la vis étant engagée dans un orifice (40) percé dans le piston (4), qu'elle obture de façon étanche pour être soumise à la pression atmosphérique, et présentant un épaulement conique (10) susceptible d'être sélectivement bloqué en rotation par une surface conique interne (11) du piston, fixe en rotation, contre laquelle cet épaulement se trouve appuyé avec une force croissant avec la pression du fluide hydraulique, **caractérisé en ce qu'**il comprend en outre un manchon cylindrique axial (18) dans lequel l'écrou (7) se trouve guidé par sa seconde extrémité (7b), et qui est pourvu d'une collerette radiale (18a) emprisonnée entre le ressort (16) et l'organe de retenue (17).

## Patentansprüche

1. Bremsbetätigungsvorrichtung, umfassend: einen im wesentlichen zylindri-schen Körper (1), gefüllt mit einer unter variablem Druck stehenden Hydraulikflüssigkeit; ein mechanisches Betätigungsglied (3), das zwei gegeneinander drehbare Scheiben enthält (12, 14), die eine Baugruppe bilden, die entlang einer axialen Richtung (X) eine Dicke aufweist, die durch Betätigen eines von außerhalb des Körpers zugänglichen Steuermittels (3a) eingestellt werden kann; einen Bremskolben (4), der den Körper dicht verschließt und in ihm unter der Wirkung des Betätigungsgliedes gleiten kann, um seinerseits wenigstens ein Reibmittel (6a, 6b) zu betätigen; und eine automatische Einstellvorrichtung (5), die im Inneren des Körpers, zwischen dem mechanischen Betätigungsglied und dem Kolben, angeordnet ist, um das durch den Verschleiß der Reibmittel verursachte Spiel auszugleichen, wobei die Vorrichtung enthält: eine wahlweise drehbare Schraube (9), mit derem ersten Ende (9a) eine verlängerte Schraubenmutter (7) in Eingriff ist, die drehfest ist; eine vorgespannte Feder (16), die ein erstes Ende (7a) der Schraubenmutter gegen wenigstens eine der Scheiben (12, 14) drückt; und ein Rückhaltemittel (17), auf dem sich die Feder (16) abstützt und das wenigstens eine der Scheiben (12, 14), das erste Ende (7a) der Schraubenmutter und die Feder (16) einspannt, wobei das zweite Ende (9b) der Schraube in eine Öffnung (40) eingreift, die in den Kolben (4) gebohrt und von dem zweiten Ende dicht abgeschlossen ist, um dem Atmosphärendruck ausgesetzt zu sein, und wobei das zweite Ende eine konische Abstufung (10) aufweist, die durch eine konische innere Fläche (11) des drehfesten Kolbens, gegen die diese Abstufung mit einer Kraft gedrückt wird, die mit dem Druck der Hydraulikflüssigkeit zunimmt, wahlweise drehfest blokkiert werden kann, **dadurch gekennzeichnet, daß** er zudem eine axiale, zylindrische Überschiebemuffe (18) aufweist, in der die Schraubenmutter (7) mit ihrem zweiten Ende (7b) geführt wird und die mit einem radialen Kragen versehen ist (18a), der zwischen der Feder (16) und dem Rückhaltemittel (17) eingeschlossen ist.

## Claims

1. A brake actuator comprising : a substantially cylindrical body (1) filled with a hydraulic fluid which is subjected to a variable pressure; a mechanical actuating means (3) including two plates for relative rotation (12, 14) forming an assembly which presents, in an axial direction (X), a thickness which is adapted to be controlled by the actuation of a control member (3a) which is accessible from the exterior of the body; a brake piston (4) which closes off the body sealingly and is adapted to slide therein in response to the action of the actuating means to actuate in turn at least one friction means (6a, 6b); and an automatic adjustment device (5) disposed within the body between the mechanical actuating means and the piston to compensate for play resulting from wear of the friction means, this device itself comprising : a selectively rotatable screw (9), onto a first end (9a) of which is engaged an elongate nut (7), which is rotationally fixed; a prestressed spring (16) which applies a first end (7a) of the nut against at least one of the plates (12, 14); and a retention member (17) against which the spring (16) bears and which urges together the at least one plate (12, 14), the first end (7a) of the nut, and the spring (16); the second end (9b) of the screw being engaged into an orifice (40) formed in the piston (4), which it closes off sealingly so as to be subjected to atmospheric pressure, and which presents a conical shoulder (10) adapted to be selectively locked against rotation by an internal conical surface (11) of the piston, which is fixed rotationally, against which this shoulder is urged with a force which increases with the pressure of the hydraulic fluid, **characterised in that**, in addition, it comprises an axial cylindrical sleeve (18) within which the nut (7) is guided by its second end (7b), and which is provided with a radial collar (18a) trapped between the spring (16) and the retention member (17).
